# EUROPÄISCHE PATENTSCHRIFT

(11) **EP 2 226 272 B1**
(45) Veröffentlichungstag und Bekanntmachung des Hinweises auf die Patenterteilung: **31.10.2012**
(21) Anmeldenummer: 10155159.6
(22) Anmeldetag: 02.03.2010
(51) Int. Cl.: B65G 1/02

(54) **Regalsystem**
Shelving system
Système d'étagère

(30) Priorität: 02.03.2009 DE 102009001275
(43) Veröffentlichungstag der Anmeldung: 08.09.2010
(73) Patentinhaber: BITO-Lagertechnik Bittmann GmbH, 55590 Meisenheim (DE)
(72) Erfinder: Kemperdick, Arthur, 55758, Niederwörresbach (DE); Gassner, Okten, 55571, Odernheim/Glan (DE)
(74) Vertreter: Richardt Patentanwälte GbR

(56) Entgegenhaltungen:
- WO-A2-02/079056
- US-A- 4 765 493
- US-A- 6 073 743
- US-A1- 2002 064 441
- US-A1- 2008 164 116

## Beschreibung

Die Erfindung betrifft ein Regalsystem für Paletten oder Stückgut.

Aus der US 2006/0037832 A1 ist ein Einlegesegment zur Realisierung eines Durchlaufregals bekannt. Die US 6 073 743 A1 offenbart ein Regalsystem gemäß dem Oberbegriff des Anspruchs 1. Der Erfindung liegt demgegenüber die Aufgabe zugrunde, ein verbessertes Regalsystem, mit einer erhöhten Flexibilität, zu schaffen.

Die der Erfindung zugrundeliegende Aufgabe wird mit den Merkmalen des Patenanspruchs 1 gelöst. Ausführungsformen der Erfindung sind in den abhängigen Patentansprüchen angegeben.

Nach Ausführungsformen der Erfindung wird ein Regalsystem mit Stützrahmen zur Aufnahme von Längstraversen und mit Einlegesegmenten zum Einlegen zwischen zwei gegenüberliegenden Längstraversen geschaffen. Jedes der Einlegesegmente wird durch mehrere parallel zueinander angeordnete Rollenleisten gebildet, die zwischen ersten und zweiten Trägerprofilen befestigt sind.

Die Trägerprofile bilden jeweils eine Auflagefläche zum Auflegen auf eine der Längstraversen und jeweils einen Befestigungsbereich zur Befestigung der Enden der Rollenleisten. Die Auflageflächen und die Befestigungsbereiche haben bei den ersten und zweiten Trägerprofile jeweils unterschiedliche Abstände, wobei die Abstände so gewählt sind, dass in einer Einlegeposition, in der ein Einlegesegmenten zwischen gegenüberliegende Längstraversen eingelegt ist, ein Gefälle der Rollenleisten resultiert.

Bei den ersten und zweiten Trägerprofilen handelt es sich jeweils um ein gebogenes Blech, wobei die Bleche jeweils die gleiche Breite haben. Die Bleche sind so ausgebildet, dass die an den Blechen gebildeten Auflageflächen auf der Längstraverse aufliegen können.

Unter einem "Regalsystem" wird hier ein mit den erfindungsgemäßen Komponenten aufgebautes Regal verstanden, das heißt ein Regal, das mehrere Stützrahmen aufweist, die durch Längstraversen miteinander verbunden sind, wobei zwischen zwei gegenüberliegende Längstraversen mehrere Einlegesegmente einlegbar sind und/oder eingelegt sind.

Ferner wird hier unter einem "Regalsystem" auch ein solches Regal verstanden, wenn es sich im zerlegten Zustand befindet.

Unter einer "Rollenleiste" wird hier ein nach oben offenes Leistenprofil verstanden, in dem hintereinander Rollen befestigt sind, die über die Oberkante des Leistenprofils hinausragen, wobei die Rollen parallel zueinander ausgerichtete Achsen haben.

Die Erfindung ist besonders vorteilhaft, da die zwei gegenüberliegende Längstraversen, in die die Einlegesegmente einlegbar sind, auf derselben Höhe angeordnet sein können, da das für die Realisierung eines Stückgut-Durchlaufregals notwendige Gefälle der Rollenleisten durch die Ausbildung der Trägerprofile realisiert wird. Dies hat den besonderen Vorteil, dass durch das Regalssystem ein Palettenregal gebildet werden kann, wenn nämlich die Einlegesegmente nicht zwischen die Längstraversen eingelegt sind. Die Paletten können dann beispielsweise auf zwei gegenüberliegende Längstraversen aufgestellt werden.

Durch das Regalsystem kann auch ein Stückgut-Durchlaufregal gebildet werden, indem zwischen sämtliche der Längstraversen die Einlegesegmente eingelegt werden.

Nach einer Ausführungsform der Erfindung ist es auch möglich, durch das erfindungsgemäße Regalsystem ein Regal zu schaffen, welches einen Palettenregalbereich und einen Stückgut-Durchlaufregalbereich aufweist. Dies kann dadurch realisiert werden, indem zwischen einige der Längstraversen die Einlegesegmente eingelegt werden und zwischen andere der Längstraversen nicht. In denjenigen Bereichen des Regals, in denen die Längstraversen durch die Einlegesegmente miteinander verbunden werden, wird ein Stückgut-Durchlaufregalbereich geschaffen, wohingegen in denjenigen Bereichen des Regals, in denen die Längstraversen nicht durch die Einlegesegmente miteinander verbunden werden, ein Palettenregalbereich gebildet wird.

Dies ist besonders vorteilhaft, da es so leicht möglich ist, ein Regal zum Beispiel von einem reinen Palettenregal in ein reines Stückgut-Durchlaufregal umzurüsten, indem die Einlegesegmente zwischen die Längstraversen eingelegt werden, und zwar ohne dass es erforderlich ist, die Stützrahmen und/oder die Längstraversen zu demontieren.

Ausführungsformen der Erfindung sind besonders vorteilhaft, da ein reines Palettenregal in ein Regal umgerüstet werden kann, welches sowohl einen Palettenregalbereich als auch einen Stückgut-Durchlaufregalbereich aufweist. Hierzu werden Einlegesegmente zwischen gegenüberliegende Längstraversen, die keine Paletten tragen, eingelegt, wodurch der Stückgut-Durchlaufregalbereich gebildet wird. Von ganz besonderem Vorteil ist es dabei, dass die in dem Regal gelagerten Paletten für die Umrüstung des Palettenregals in ein gemischtes Paletten- und Stückgut-Durchlaufregal nicht aus dem Regal entfernt werden müssen, da für die Umrüstung keine Veränderung an der tragenden Struktur des Regals, das heißt an den Stützrahmen und an den Längstraversen, erforderlich ist.

Ausführungsformen der Erfindung sind besonders vorteilhaft, da durch die ersten und zweiten Trägerprofile, welche auf den Längstraversen aufliegen, die Längstraversen geschützt werden. Insbesondere wird durch die Trägerprofile vermieden, dass beim Auflegen eines Stückguts auf einen Stückgut-Durchlaufregalbereich oder bei der Entnahme des Stückguts der Längsträger verkratzt wird. Ein solches Verkratzen des Längsträgers kann nämlich langfristig Korrosion zur Folge haben, welche die mechanische Stabilität des Regals beeinträchtigen kann. Dies wird durch die erfindungsgemäße Ausbildung der Trägerprofile vermieden.

Von besonderem Vorteil ist ferner, dass durch die ersten und zweiten Trägerprofile eine durchgehende Kante gebildet wird, welche die Handhabung des Stückguts erleichtert. Dabei ist besonders vorteilhaft, dass beim Aufgeben des Stückguts das Stückgut am hinteren Ende des Durchlaufregalbereichs nicht über eine hohe Kante hinweggehoben werden muss.

Ausführungsformen der Erfindung sind ferner besonders vorteilhaft, da die Einlegesegmente konstruktiv bedingt ein relativ geringes Gewicht aufweisen, sodass die Statik des Regals durch die Einlegesegmente nur wenig belastet wird.

Ausführungsformen der Erfindung sind ferner besonders vorteilhaft, da für die Realisierung der Einlegesegmente auf im Stand der Technik übliche Rollenleisten zurückgegriffen werden kann, sodass also eine aufwändige Fertigung von Spezialkomponenten zur Realisierung der Einlegesegmente nicht erforderlich ist.

Nach einer Ausführungsform der Erfindung wird durch mehrere nebeneinander angeordnete Einlegesegmente ein sogenannter Rollenteppich gebildet. Ein solcher Rollenteppich kann durch Trennleisten in Rollenbahnen unterteilt werden. Zur Befestigung von Trennleisten können die Trägerprofile Befestigungsmittel aufweisen. Insbesondere können die Trennleisten und/oder die Befestigungsmittel zur lösbaren Befestigung an verschiedenen vordefinierten und freiwählbaren Befestigungspositionen ausgebildet sein. Diese Befestigungspositionen können durch an den ersten und zweiten Trägerprofilen ausgebildete Durchgangslöcher definiert sein. Dies ist von besonderem Vorteil, da hierdurch die Flexibilität für verschiedene Einsatzmöglichkeiten von Ausführungsformen des erfindungsgemäßen Regalsystems weiter erhöht wird.

Nach einer Ausführungsform der Erfindung hat das Regalsystem zumindest ein Auflageelement, wobei zumindest eines der ersten und zweiten Trägerprofile Mittel zur Ausbildung einer lösbaren Verbindung mit dem Auflageelement aufweist, um das Auflageelement unterhalb der Auflagefläche zu befestigen, so dass die Längstraverse anstatt auf der Auflagefläche auf dem Auflageelement aufliegen kann. Je nach Anwendungsfall kann durch Montage des Auflageelements an dem ersten Trägerprofil das Gefälle der Rollenbahnen des Einlegesegments vergrößert und durch Montage des Auflageelements an dem zweiten Trägerprofil das Gefälle der Rollenbahnen des Einlegesegments verkleinert werden.

Im Weiteren werden Ausführungsformen der Erfindung mit Bezugnahme auf die Zeichnungen näher erläutert. Es zeigen:
- Figur 1: eine perspektivische Ansicht eines Einlegesegments einer Ausführungsform der Erfindung ,
- Figur 2: eine perspektivische Ansicht von zwei gegenüberliegenden Längstraversen, in die Einlegesegmente eingelegt sind,
- Figur 3: eine Ausführungsform eines erfindungsgemäßen Regalsystems mit einem Palettenregalbereich und mit einem Stückgut-Durchlaufregalbereich,
- Figur 4: eine seitliche Ansicht eines ersten Trägerprofils,
- Figur 5: eine weitere seitliche Ansicht des ersten Trägerprofils der Figur 3,
- Figur 6: eine Draufsicht auf das erste Trägerprofil der Figur 4,
- Figur 7: eine weitere Draufsicht auf das erste Trägerprofil der Figur 4,
- Figur 8: eine perspektivische Ansicht des Trägerprofils der Figur 4,
- Figur 9: eine seitliche Ansicht des zweiten Trägerprofils,
- Figur 10: eine weitere seitliche Ansicht des zweiten Trägerprofils der Figur 9,
- Figur 11: eine Draufsicht auf das zweite Trägerprofil der Figur 9,
- Figur 12: eine weitere Draufsicht auf das zweite Trägerprofil der Figur 10,
- Figur 13: eine perspektivische Ansicht des zweiten Trägerprofils der Figur 9,
- Figur 14: eine Trennleiste vor der Montage an den Trägerprofilen in seitlicher Ansicht,
- Figur 15: einen Querschnitt durch das Profil der Trennleiste der Figur 14,
- Figur 16: eine Draufsicht auf die Trennleiste der Figur 14,
- Figur 17: die Trennleiste der Figur 14 nach der Montage,
- Figur 18: eine Detailansicht im Bereich der Auflage des zweiten Trägerprofils auf einer Längstraverse mit montiertem Auflageelement.

Elemente der nachfolgenden Ausführungsformen, die einander entsprechen, werden jeweils mit denselben Bezugszeichen gekennzeichnet.

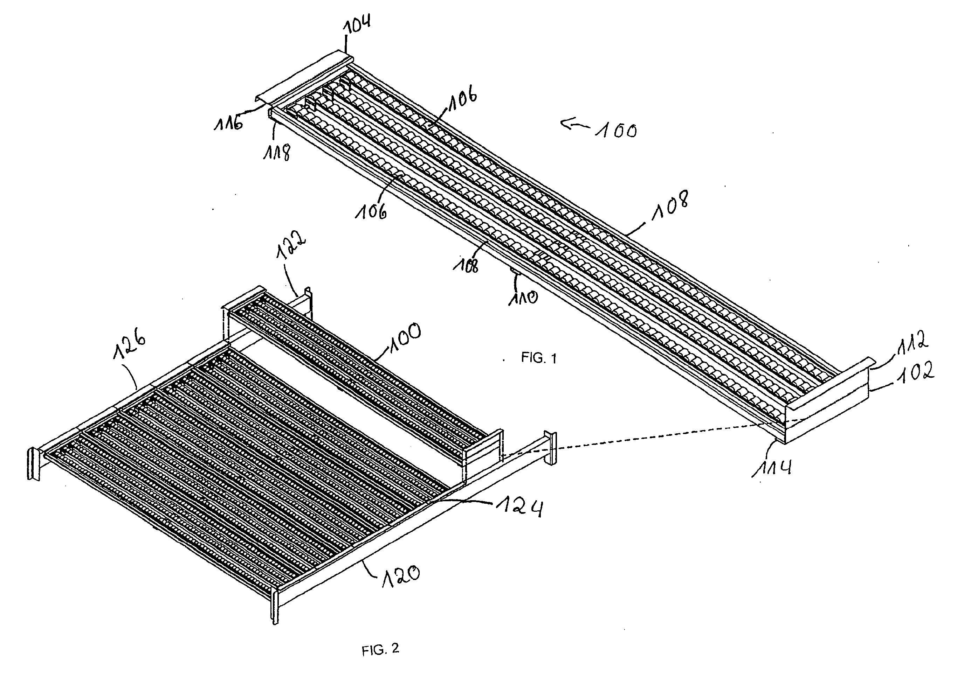

Die Figur 1 zeigt ein Einlegesegment 100. Das Einlegesegment 100 hat ein erstes Trägerprofil 102 und ein zweites Trägerprofil 104. Zwischen den Trägerprofilen 102 und 104 befinden sich Rollenleisten 106. In der hier betrachteten Ausführungsform beinhaltet das Einlegesegment 100 vier Rollenleisten 106. Nach anderen Ausführungsformen kann das Einlegesegment 100 auch zwei, drei oder mehr als vier Rollenleisten 106 aufweisen.

Die Trägerprofile 102 und 104 werden ferner durch seitliche Stützprofile 108 miteinander verbunden. Diese können z.B. ein C-förmiges Profil haben. Durch diese Stützprofile 108 wird zusammen mit den Trägerprofilen 102 und 104 ein Rahmen gebildet, der die mechanische Stabilität des Einlegesegments 100 erhöht. Zwischen den Stützprofilen 108 kann ferner eine Traverse 110 befestigt sein, um die mechanische Stabilität des Einlegesegments 100 weiter zu erhöhen.

Bei der hier betrachtenden Ausführungsform sind die Rollenleisten 106 seitlich voneinander beabstandet, sodass zwischen zwei benachbarten Rollenleisten 106 ein Zwischenraum besteht. Zur weiteren Erhöhung der Tragfähigkeit des Einlegesegments 100 kann so vorgegangen werden, dass in eine oder mehrere dieser Zwischenräume jeweils ein weiteres Stützprofil 108 oder eine weitere Rollenleiste 106 eingebaut wird.

An dem Trägerprofil 102 ist eine erste Auflagefläche 112 ausgebildet sowie ein erster Befestigungsbereich 114. Die Auflagefläche 112 dient zum Auflegen des vorderen Endes des Einlegesegments 100 auf die vordere Längstraverse 120 (vgl. Fig. 2). Der Befestigungsbereich 114 dient zur Befestigung der vorderen Enden der Rollenleisten 106 und gegebenenfalls der Stützprofile 108 an dem Trägerprofil 102.

Das Trägerprofil 104 hat eine entsprechende Auflagefläche 116 zur Auflage auf einer hinteren Längstraverse 122 (vgl. Fig. 2) und einen zweiten Befestigungsbereich 118 zur Befestigung der hinteren Enden der Rollenleisten 106 und gegebenenfalls der Stützprofile 108.

Die Figur 2 zeigt exemplarisch zwei gegenüberliegende Längstraversen, nämlich eine vordere Längstraverse 120 und eine hintere Längstraverse 122, in die bereits fünf baulich identische Einlegesegmente 100 nebeneinander eingelegt sind, sodass auf der Längstraverse eine vordere Entnahmekante 124, die durch die bündig aneinander anschließenden Trägerprofile 102 gebildet wird, sowie eine Aufgabekante 126, die durch die ebenfalls bündig aneinander anschließenden Trägerprofile 104 gebildet wird, und über die das Stückgut auf den durch die nebeneinander angeordneten Einlegesegmente 100 gebildeten Rollenteppich aufgegeben werden kann.

Die Figur 2 zeigt ferner eines der Einlegesegmente 100 während des Einlegens zwischen die Längstraversen 120 und 122. Auf die gleiche Art und Weise können die Einlegesegmente 100 von den Längstraversen 120, 122 auch wieder entnommen werden.

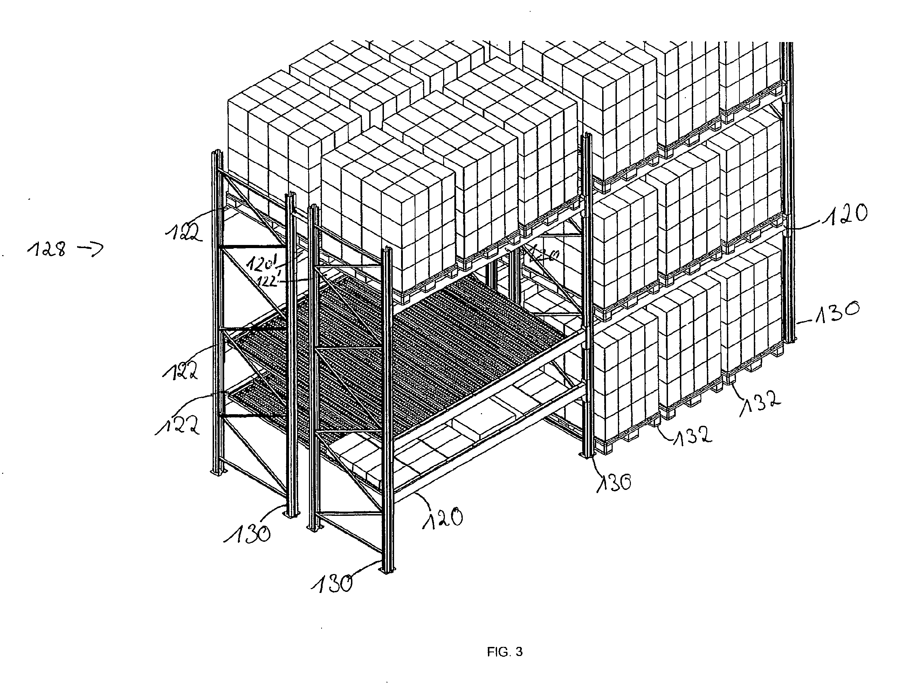

Die Längstraversen 120, 122 können beispielsweise um 110 cm beabstandet sein, sodass man eine sogenannte Europalette auf die einander gegenüberliegenden Längstraversen 120, 122 aufstellen kann, wie in der Figur 3 gezeigt. Die Einlegesegmente 100 haben dann dementsprechend ebenfalls eine Länge von 110 cm. Wenn der Durchlaufregalbereich eine größere Länge haben soll, so können die einander gegenüberliegenden Längstraversen 120, 122 auch einen größeren Abstand haben, zum Beispiel von 240 cm, sodass auch die Einlegesegmente zur Realisierung solcher längerer Durchlaufregalbereiche diese Länge aufweisen. Es können auch Einlegesegmente 100 unterschiedlicher Länge zu dem Regalsystem gehören, sodass sich unterschiedlich lange Stückgut-Durchlaufregalbereiche realisieren lassen.

Die Figur 3 zeigt eine Ausführungsform eines erfindungsgemäßen Regalsystems 128. Das Regalsystem 128 hat Stützrahmen 130, zwischen denen in mehreren Ebenen Längstraversen 120 und 122 befestigt sind. Zwei gegenüberliegende Längstraversen 120, 122 derselben Ebene befinden sich dabei vorzugsweise auf derselben Höhe.

In die Längstraversen 120, 122 der beiden linken unteren Ebenen des Regalsystems 128 sind Einlegesegmente 100 eingelegt, wie in der Figur 3 gezeigt. Dadurch wird ein Stückgut-Durchlaufregalbereich in dem Regalsystem 128 geschaffen. Dagegen sind auf die Längstraversen 120, 122 der weiteren Ebenen des Regalsystems 128 Paletten 132, wie zum Beispiel sogenannte Europaletten, gestellt. Durch die Längstraversen 120, 122 des Regalsystems 128, in die keine Einlegesegmente 100 eingelegt sind, wird also ein Palettenregalbereich des Regalsystems 128 gebildet.

Zur Erweiterung des Stückgut-Durchlaufregalbereichs können nach Entnahme der Paletten 132 aus einer Ebene zwischen zwei gegenüberliegende Längstraversen 120, 122 Einlegesegmente 100 eingelegt werden, um eine solche Ebene in einen Stückgut-Durchlaufregalbereich zu transformieren. Umgekehrt ist es auch möglich, eine Ebene des Stückgut-Durchlaufregalbereichs in den Palettenregalbereich zu überführen, indem die Einlegesegmente 100 aus dieser Ebene entnommen werden.

Die in der Figur 3 gezeigten Stützrahmen 130 haben beispielsweise eine Tiefe von 110 cm und sind voneinander um 20 cm beabstandet. Wenn eine Ebene des Palettenregalbereichs in den Stückgut-Regalbereich überführt werden soll, der zwei Palettenlängen überbrückt, so werden die zwei innenliegenden Längsträger 122' bzw. 120' demontiert, nachdem die Paletten von dieser Regalebene entfernt worden sind. Danach können dann die Einlegesegmente 100 zwischen die außenliegenden Längstraversen 120 und 122 eingelegt werden, wie in der Figur 3 für die unteren beiden linken Ebenen gezeigt.

Mit Hilfe der demontierten Längstraversen 122' und 120' kann eine weitere Ebene in dem Regalsystem 128 realisiert werden, und zwar entweder zur Realisierung eines Palettenregalbereichs, indem diese Längstraversen 120' und 122' einander gegenüberliegend an denselben Stützrahmen 130 montiert werden oder um beispielsweise eine weitere Ebene des Stückgut-Durchlaufregalbereichs zu schaffen, indem die Längstraversen 120', 122' an verschiedenen der Stützrahmen 130 außenliegend montiert werden, um so die 240 cm langen Einlegesegmente 100 einlegen zu können.

Das Regalsystem 128 kann auch so ausgebildet sein, dass nicht zwei oder mehrere der Stützrahmen 130 voreinander angeordnet sind, wie dies in der Ausführungsform der Fig. 3 für zwei Stützrahmen 130 gezeigt ist, sondern dass die Tiefenerstreckung des Regalsystem 128 durch nur einen Stützrahmen 130 gegeben ist, d.h. das Regelsystem hat nur eine Reihe von Stützrahmen 130. In diesem Fall kommen entsprechend kurze Einlegesegmente 100 zum Einsatz, die z.B. die Längstraversen 122 und 120' miteinander verbinden können, wenn nur die hinteren der Stützrahmen 130 vorhanden sind.

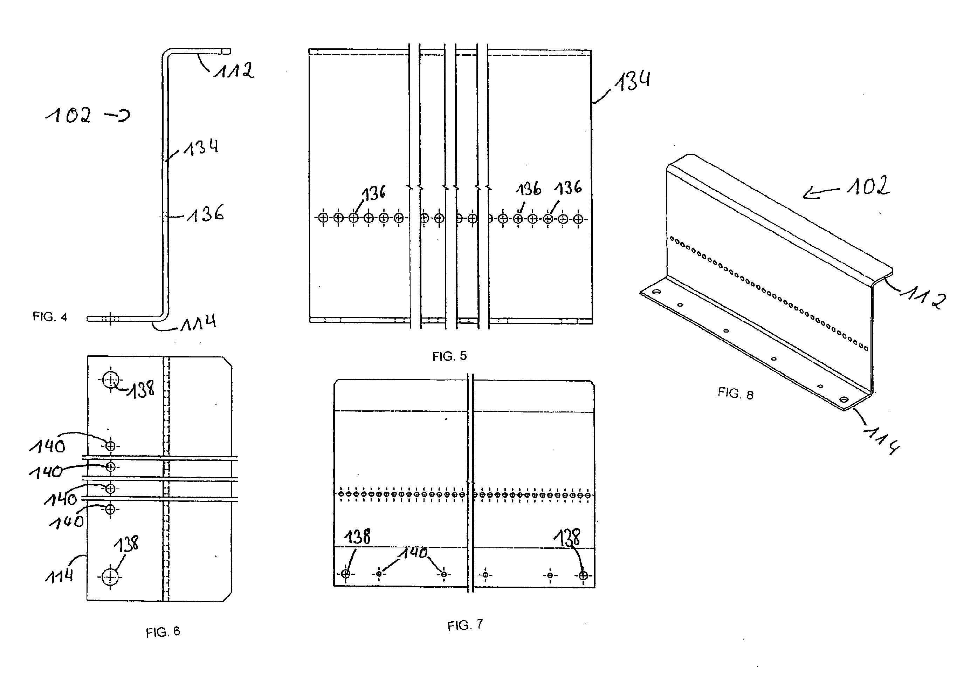

Die Figur 4 zeigt eine Detailansicht eines Trägerprofils 102 einer Ausführungsform der Erfindung. Bei dieser Ausführungsform werden die Auflagefläche 112 und der Befestigungsbereich 114 durch eine in vertikaler Richtung verlaufende Fläche 134 miteinander verbunden. Die Fläche 134 bildet mit dem Befestigungsbereich 114 und mit der Auflagefläche 112 beispielsweise jeweils in etwa einen rechten Winkel.

In der Fläche 134 sind mehrere nebeneinander äquidistant angeordnet Durchgangslöcher 136 ausgebildet, wie es auch in der Figur 5 dargestellt ist. Durch jedes dieser Durchgangslöcher 136 wird eine mögliche Befestigungsposition zur Befestigung einer Trennleiste zur Aufteilung des Rollenteppichs in Rollenbahnen definiert.

Die Figur 6 zeigt den Befestigungsbereich 114 in einer Draufsicht. Der Befestigungsbereich 114 hat Durchgangslöcher 138 zur Herstellung von Schraubverbindungen mit den Stützprofilen 108 (vgl. Figur 1).

Ferner sind in dem Befestigungsbereich 114 Befestigungsmittel 140 angeordnet, die zur Befestigung der vorderen Enden der Rollenleisten 106 dienen. Die Befestigungsmittel 140 können beispielsweise zum Aufstecken der Rollenleisten 106 ausgebildet sein.

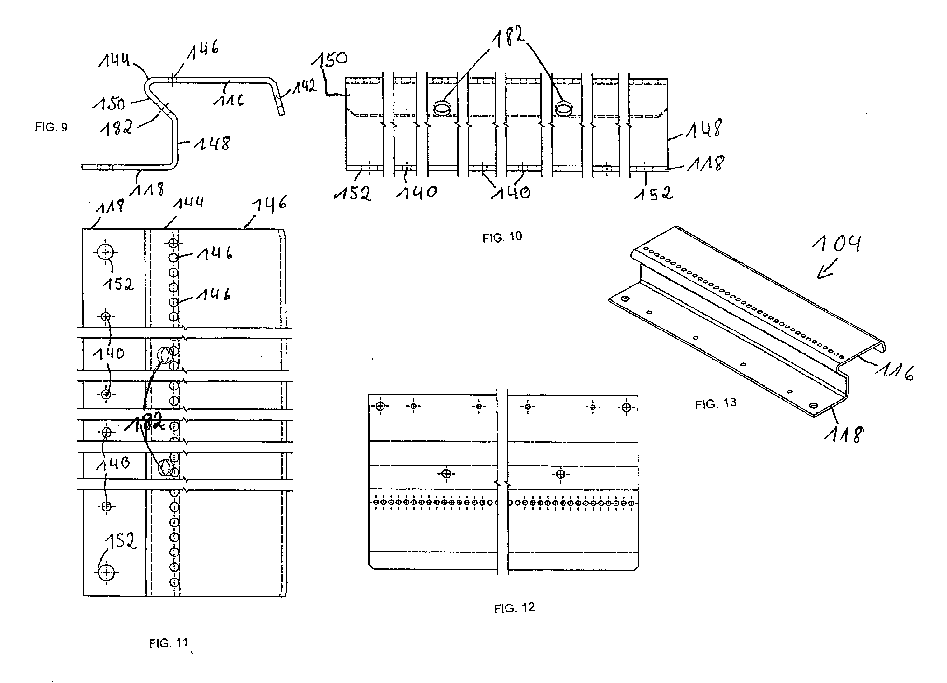

Die Figur 9 zeigt eine seitliche Ansicht eines Trägerprofils 104 einer Ausführungsform der Erfindung. Bei dieser Ausführungsform geht von der Auflagefläche 116 ein hinterer Schenkel 142 aus, durch den mit der Auflagefläche 116 ein stumpfer Winkel von beispielsweise 105° gebildet wird. Dieser Schenkel 142 erleichtert das Einhängen und das Positionieren des Einlegesegments 100 zwischen den Längstraversen 120, 122.

An dem Trägerprofil 104 ist in der Ausführungsform gemäß Figur 9 ein Vorsprung ausgebildet. Dieser Vorsprung wird erfindungsgemäß an dem vorderen Ende der Auflagefläche 116 durch einen spitzen Winkel von beispielsweise 45° gebildet. Der obere Schenkel 144 schließt sich an das vordere Ende der Auflagefläche 116 an. In dem oberen Schenkel 144 sind mehrere Durchgangslöcher 146 nebeneinander angeordnet. Durch diese Durchgangslöcher 146 sind mögliche Befestigungspositionen zur Befestigung einer Trennleiste definiert. Die Figur 11 zeigt die nebeneinander äquidistant angeordneten Durchgangslöcher 146.

Das Trägerprofil 104 hat ferner einen von dem Befestigungsbereich 118 beispielsweise in einem rechten Winkel nach oben ausgehenden Abschnitt 148, durch den eine Fläche gebildet wird, die an der Stirnseite der Längstraverse 120 anliegen kann. Ein unterer Schenkel 150 des spitzen Winkels verbindet den Schenkel 144 und das obere Ende des Abschnitts 148.

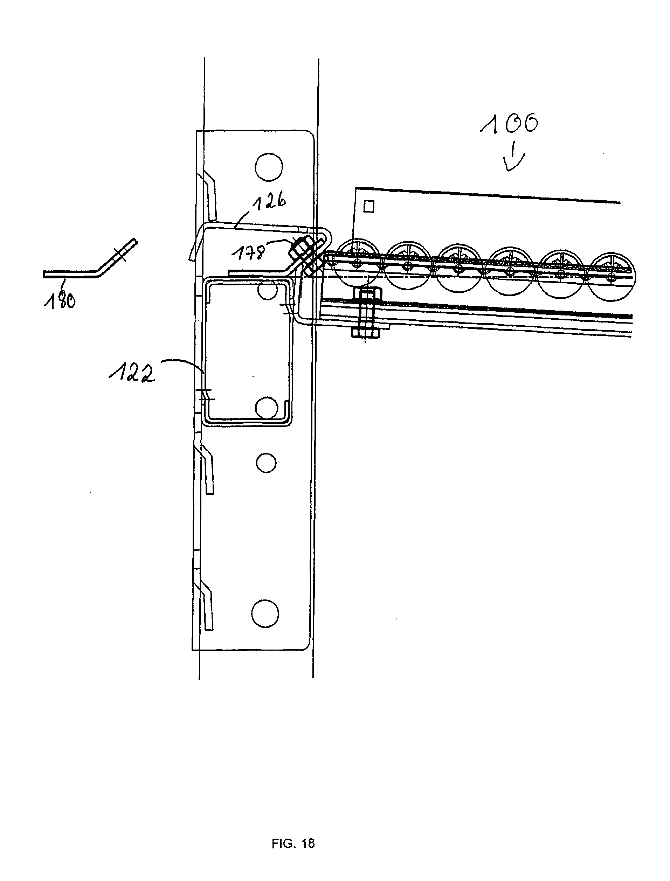

Bei der hier betrachteten Ausführungsform hat der Schenkel 150 Durchgangslöcher 182, die zur Ausbildung einer lösbaren Verbindung 178 (vgl. Fig. 18) mit einem Auflageelement 180 vorgesehen sind, um das Gefälle zu verringern. Bei der lösbaren Verbindung 178 kann es sich um eine Schraubverbindung handeln, wie in der Fig. 18 dargestellt. Das Auflageelement 180 kann winkelförmig ausgebildet sein. Alternativ kann das Auflageelement auch z.B. zur Montage unmittelbar an der Auflagefläche 116 ausgebildet sein. Auch für das vordere Trägerprofil 102 kann ein entsprechendes Auflageelement vorgesehen sein, um das Gefälle bei Bedarf zu vergrößern. Hierzu können an der Auflagefläche 112 und/oder an der Fläche 134 Befestigungsmittel angeordnet sein, wie z.B. weitere Durchgangslöcher.

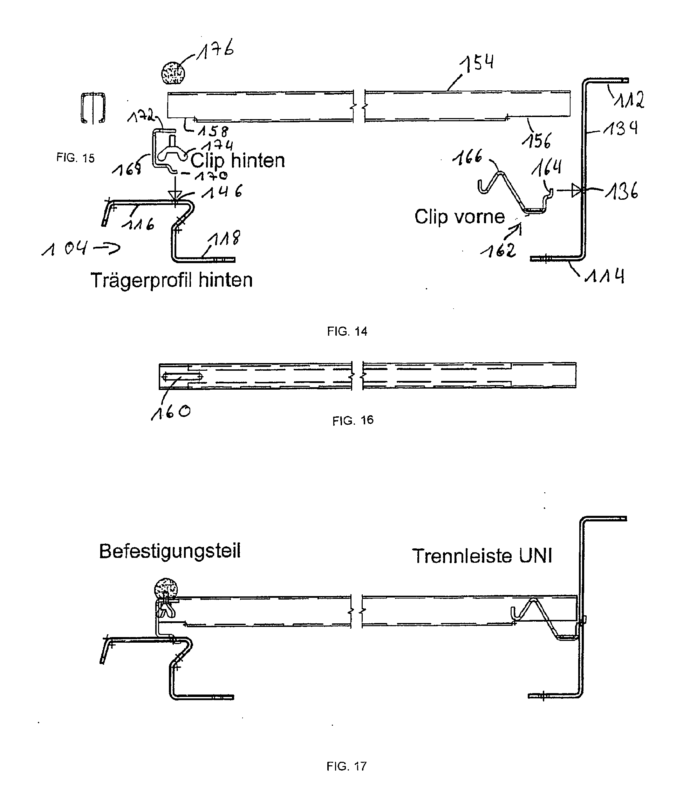

Der durch den spitzen Winkel gebildete Vorsprung des Trägerprofils 104 dient als Aufnahmebereich für die hinteren Befestigungsmittel, d.h. in der Ausführungsform der Figur 14 bis 17 zur Aufnahme der Flügelschraube 174.

In dem Befestigungsbereich 118 sind Durchgangslöcher 152 zur Befestigung der hinteren Enden der Stützprofile 108 angeordnet. Mit Hilfe der Durchgangslöcher 152 können die hinteren Enden der Stützprofile 108 an dem Trägerprofil 104 verschraubt werden.

Ferner sind an dem Befestigungsbereich 118 die Befestigungsmittel 140 ausgebildet.

Die Figur 14 zeigt eine Trennleiste 154 vor der Montage an den Trägerprofilen 102 und 104 des Einlegesegments 100 (vgl. Figur 1). Bei der Trägerleiste handelt es sich um ein Hohlprofil. An ihrem vorderen Ende hat die Trennleiste 154 einen nach unten offenen Abschnitt 156 und an ihrem hinteren Ende hat die Trennleiste 154 einen nach unten offenen Abschnitt 158. Ferner hat die Trennleiste 154 an ihrem hinteren Ende an ihrer Oberseite ein Langloch 160, wie in der Figur 16 dargestellt.

Zur Befestigung des vorderen Endes der Trennleiste 154 an dem Trägerprofil 102 dient ein Clip 162. Der Clip 162 hat ein gabelförmiges Eingriffselement 164, welches durch eines der Durchgangslöcher 136, die an der Fläche 134 ausgebildet sind, hindurchgeführt werden kann, um den Clip 162 in das Trägerprofil 102 einzuhängen. Von dem Eingriffselement 164 ausgehend bildet der Clip 162 einen hakenförmigen Abschnitt 166, der zur Einführung in den Abschnitt 156 der Trennleiste 154 vorgesehen ist. Die Trennleiste 154 liegt dann an ihrem vorderen Ende auf dem hakenförmigen Abschnitt 166 des Clips 162 auf.

Zur Befestigung des hinteren Endes der Trennleiste 154 an dem Trägerprofil 104 ist ein weiterer Clip 168 vorgesehen. Der Clip 168 hat ein gabelförmiges Eingriffselement 170, welches dazu ausgebildet ist, in eines der Durchgangslöcher 146, die an der Auflagefläche 116 ausgebildet sind, eingeführt zu werden. Der Clip 168 hat einen oberen Bereich 172, durch den hindurch eine Flügelschraube 174 hindurchgeführt werden kann, um mit einem Knopf 176 eine Schraubverbindung mit dem hinteren Ende der Trennleiste 154 herzustellen.

Zur Montage der Trennleiste 154 an dem Einlegesegmente 100 wird beispielsweise wie folgt vorgegangen:

Der Clip 162 wird mit Hilfe seines Eingriffselements 164 in eines der Durchgangslöcher 136 des Trägerprofils 102 eingehängt. Der Clip 168 wird mit Hilfe seines Eingriffselements 170 in dem gegenüberliegenden Durchgangsloch 146 des Trägerprofils 104 positioniert. Das Trägerprofil wird dann an seinem Abschnitt 156 auf den Abschnitt 166 gelegt und der Clip 168 wird in den Abschnitt 158 der Trennleiste 154 eingeführt. Die Flügelschraube 174 wird durch den Bereich 172 hindurch durch das Langloch 160 gesteckt und der Knopf 176 kann manuell festgedreht werden.

Vorzugsweise ist der Clip 168 dabei so ausgebildet, dass die Flügelschraube 174 in ihrer Drehbewegung blockiert wird, sodass sie sich nicht mit der Drehung des Knopfes 176 mitdrehen kann.

Die Figur 17 zeigt die Trennleiste 154 im montierten Zustand.

### Bezugszeichenliste

- 100: Einlegesegmente
- 102: Trägerprofil
- 104: Trägerprofil
- 106: Rollenleiste
- 108: Stützprofil
- 110: Traverse
- 112: Auflagefläche
- 114: Befestigungsbereich
- 116: Auflagefläche
- 118: Befestigungsbereich
- 120: Längstraverse
- 122: Längstraverse
- 124: Entnahmekante
- 126: Aufgabekante
- 128: Regalsystem
- 130: Stützrahmen
- 132: Palette
- 134: Fläche
- 136: Durchgangsloch
- 138: Durchgangsloch
- 140: Befestigungsmittel
- 142: Schenkel
- 144: Schenkel
- 146: Durchgangsloch
- 148: Abschnitt
- 150: Schenkel
- 152: Durchgangsloch
- 154: Trennleiste
- 156: Abschnitt
- 158: Abschnitt
- 160: Langloch
- 162: Clip
- 164: Eingriffselement
- 166: Abschnitt
- 168: Clip
- 170: Eingriffselement
- 172: Bereich
- 174: Flügelschraube
- 176: Knopf
- 178: Verbindung
- 180: Auflageelement
- 182: Durchgangsloch

## Patentansprüche

1. Regalsystem mit Stützrahmen (130) zur Aufnahme von Längstraversen (120, 120', 122, 122') und mit Einlegesegmenten (100) zum Einlegen zwischen zwei gegenüberliegenden Längstraversen (120,120',122,122'), wobei ein Einlegesegment (100) durch mehrere parallel zueinander angeordnete Rollenleisten (106) gebildet wird, die an ihren ersten Enden an einem ersten Trägerprofil (102) und an ihren zweiten Enden an einem zweiten Trägerprofil (104) befestigt sind, wobei an dem oberen Ende des ersten Trägerprofils (102) eine erste Auflagefläche (112) zum Auflegen auf einer der Längstraversen (120, 120', 122, 122') ausgebildet ist, wobei an dem unteren Ende des ersten Trägerprofils (102) ein erster Befestigungsbereich (114) zur Befestigung der ersten Enden der Rollenleisten (106) ausgebildet ist, wobei die erste Auflagefläche (112) von dem ersten Befestigungsbereich (114) um einen ersten Abstand beabstandet ist, und wobei an dem oberen Ende des zweiten Trägerprofils (104) eine zweite Auflagefläche (116) zum Auflegen auf einer der Längstraversen (120, 120', 122, 122') ausgebildet ist, wobei an dem unteren Ende des zweiten Trägerprofils (104) ein zweiter Befestigungsbereich (118) zur Befestigung der zweiten Enden der Rollenleiste (106) ausgebildet ist, wobei die zweite Auflagefläche (116) von dem zweiten Befestigungsbereich (118) um einen zweiten Abstand beabstandet ist, wobei der erste Abstand größer als der zweite Abstand ist, sodass in einer zwischen den Längstraversen (120, 120', 122, 122') eingelegten Position die Rollenleisten (106) des Einlegesegments (100) ein Gefälle von deren zweiten Enden zu den ersten Enden aufweisen, wobei es sich bei den ersten und zweiten Trägerprofilen (102, 104) jeweils um ein gebogenes Blech handelt, und wobei die ersten und zweiten Auflageflächen (112, 116) zum Aufliegen auf einer der Längstraversen (120, 120', 122, 122') ausgebildet sind, **dadurch gekennzeichnet, daß** an dem vorderen Ende der zweiten Auflagefläche (116) ein spitzer Winkel (144, 150) gebildet wird, wobei der spitze Winkel einen oberen Schenkel (144) und einen unteren Schenkel (150) hat, wobei in dem oberen Schenkel (144) mehrere nebeneinander angeordnete Durchgangslöcher (146) ausgebildet sind.

2. Regalsystem nach Anspruch 1, wobei durch zumindest einige der Stützrahmen (130) und zumindest einige der Längstraversen (120,120',122,122') ein Palettenregalbereich gebildet wird.

3. Regalsystem nach Anspruch 1 oder 2, wobei durch die zwischen gegenüberliegende Längstraversen (120,120', 122,122') eingelegte Einlegesegmente (100) ein Stückgut-Durchlaufregalbereich gebildet wird.

4. Regalsystem nach Anspruch 1, 2 oder 3, wobei an dem hinteren Ende der zweiten Auflagefläche (116) ein stumpfer Winkel (116, 142) gebildet wird.

5. Regalsystem nach einem der vorhergehenden Ansprüche, wobei von dem unteren Schenkel (150) des spitzen Winkels eine im eingelegten Zustand des Einlegesegments (100) in vertikaler Richtung verlaufende Fläche (148) ausgeht, die den unteren Schenkel (150) mit dem zweiten Befestigungsbereich (118) verbindet,

6. Regalsystem nach Anspruch 5, wobei der Abstand in horizontaler Richtung zwischen der Fläche (148) und dem hinteren Ende der zweiten Auflagefläche (116) der Breite einer Längstraverse (120,120',122,122') gleicht.

7. Regalsystem nach einem der vorhergehenden Ansprüche, wobei an dem zweiten Trägerprofil (104) ein Vorsprung ausgebildet ist, wobei in dem Vorsprung mehrere nebeneinander angeordnete Durchgangslöcher (146) ausgebildet sind, wobei der Vorsprung zur Aufnahme von Befestigungsmitteln (174) ausgebildet ist.

8. Regalsystem nach einem der vorhergehenden Ansprüche, mit ersten Befestigungsmitteln (162) zur Befestigung der ersten Enden einer Trennleiste (154) an dem ersten Trägerprofil (102) und mit zweiten Befestigungsmitteln (168) zur Befestigung des zweiten Endes der Trennleiste (154) an dem zweiten Trägerprofil (104).

9. Regalsystem nach einem der vorhergehenden Ansprüche, wobei das erste Trägerprofil (102) einen Verbindungsbereich (134) aufweist, der die erste Auflagerfläche (112) und den ersten Befestigungsbereich (114) miteinander verbindet, wobei in dem Verbindungsbereich mehrere nebeneinander angeordnete Durchgangslöcher (136) ausgebildet sind.

10. Regalsystem nach einem der vorhergehenden Ansprüche, mit Befestigungsmitteln (162, 168) zur Befestigung einer Trennleiste (154) an dem ersten Trägerprofil (102) und an dem zweiten Trägerprofil (104), wobei die Befestigungsmittel Eingriffselemente (164, 170) zum Eingriff in die an den ersten und zweiten Trägerprofilen (102,104) ausgbildeten Durchgangslöcher (136, 146) aufweisen.

11. Regalsystem nach Anspruch 10, wobei die Eingriffselemente (164,170) gabelförmig ausgebildet sind.

12. Regalsystem nach einem der vorhergehenden Ansprüche, mit Trennleisten (154), wobei die Trennleisten (154) zur Bildung von Rollenbahnen jeweils als ein Hohlprofil ausgebildet sind, wobei das Hohlprofil geschlossen ist, und wobei das Hohlprofil an seinen ersten und seinen zweiten Enden nach unten offen ist, sodass Befestigungsmittel zur Befestigung einer Trennleiste (154) an den ersten und zweiten Trägerprofilen (102,104) in das Hohlprofil eingeführt werden können.

13. Regalsystem nach einem der vorhergehenden Ansprüche, wobei die ersten Befestigungsmittel (162) zur Befestigung des ersten Endes einer Trennleiste (154) an dem ersten Trägerprofil (102) für eine lose Halterung der Trennleiste (154) an dem ersten Ende ausgebildet sind, und wobei die zweiten Befestigungsmittel (168) zur Befestigung des zweiten Endes der Trennleiste (154) an dem zweiten Trägerprofil (104) zur Ausbildung einer Schraubverbindung (174, 176) für eine feste Halterung des zweiten Endes der Trennleiste (154) ausgebildet sind.

14. Regalsystem nach Anspruch 13, wobei die Trennleiste (154) an ihrem zweiten Ende ein Langloch (160) aufweist, durch das hindurch die Schraubverbindung (174,176) gebildet wird.

15. Regalsystem nach einem der vorhergehenden Ansprüche, wobei das Einlegesegment (100) zumindest zwei Stützprofile (108) aufweist, die zwischen den ersten und zweiten Trägerprofilen (102,104) befestigt sind.

16. Regalsystem nach einem der vorhergehenden Ansprüche, wobei in den ersten und zweiten Befestigungsbereichen (114,118) jeweils Befestigungspositionen (140) zur Befestigung der Rollenleisten (106) durch jeweils eine Steckverbindung ausgebildet sind.

17. Regalsystem nach einem der vorhergehenden Ansprüche, wobei die ersten und zweiten Trägerprofile (102,104) dieselbe Breite haben, so dass durch die Trägerprofile (102,104) mehrerer nebeneinander zwischen die Längstraversen (120,120',122,122') eingelegte Einiegesegmente (100) Kanten (124, 126) gebildet werden.

18. Regalsystem nach einem der vorhergehenden Ansprüche, mit einem Auflageelement (180), wobei zumindest eines der ersten und zweiten Trägerprofile (102,104) Mittel (182) zur Ausbildung einer lösbaren Verbindung (178) mit dem Auflageelement aufweist, um das Auflageelement unterhalb der Auflagefläche (112,116) zu befestigen, so dass die Längstraverse (120,120',122,122') anstatt auf der Auflagefläche auf dem Auflageelement aufliegen kann.

## Claims

1. Shelving system comprising a support frame (130) for receiving longitudinal beams (120, 120', 122, 122') and comprising insertion elements (100) to be inserted between two opposing longitudinal beams (120, 120', 122, 122'), wherein an insertion element (100) is formed by a plurality of roller bars (106) arranged parallel to one another, which are fastened at their first ends to a first girder profile (102) and at their second ends to a second girder profile (104), wherein a first contact surface (114) to be placed on one of the longitudinal beams (120, 120', 122, 122') is formed on the upper end of the first girder profile (102), wherein a first fastening region (114) to fasten the first ends of the roller bars (106) is formed on the lower end of the first girder profile (102), wherein the first contact surface (112) is arranged at a first distance from the first fastening region (114), and wherein a second contact surface (116) to be placed on one of the longitudinal beams (120, 120', 122, 122') is formed on the upper end of the second girder profile (104), wherein a second fastening region (118) to fasten the second ends of the roller bars (106) is formed on the lower end of the second girder profile (104), wherein the second contact surface (116) is arranged at a second distance from the second fastening region (118), wherein the first distance is larger than the second distance, so that the roller bars (106) of the insertion element (100), in a position inserted between the longitudinal beams (120, 120', 122, 122'), have a gradient from the second ends thereof to the first ends thereof, wherein each of the first and second girder profiles (102, 104) is a bent sheet, and wherein the first and second contact surfaces (112, 310) are formed to be placed on one of the longitudinal beams (120, 120', 122, 122'), **characterised in that** an acute angle (144, 150) is formed at the leading end of the second contact surface (116), wherein the acute angle has an upper side (144) and a lower side (150), wherein a plurality of through holes (146) arranged side-by-side are formed in the upper side (144).

2. Shelving system according to claim 1, wherein a pallet rack region is formed by at least some of the support frames (130) and at least some of the longitudinal beams (120, 120', 122, 122').

3. Shelving system according to either claim 1 or claim 2, wherein a cargo flow rack region is formed by the insertion elements (100) inserted between opposing longitudinal beams (120, 120', 122, 122').

4. Shelving system according to claim 1, 2 or 3, wherein an obtuse angle (116, 142) is formed at the trailing end of the second contact surface (115).

5. Shelving system according to any of preceding claims, wherein a surface (148) extending in the vertical direction extends from the lower side (150) of the acute angle when the insertion element (100) is inserted, said surface connecting the lower side (150) to the second fastening region (118).

6. Shelving system according to claim 5, wherein the distance in the horizontal direction between the surface (148) and the trailing end of the second contact surface (116) is equal to the width of a longitudinal beam (120, 120', 122, 122').

7. Shelving system according to any of preceding claim, wherein a protrusion is formed on the second girder profile (104), wherein a plurality of through holes (146) arranged side-by-side are formed in the protrusion, the protrusion being formed to receive fastening means (174).

8. Shelving system according to any of preceding claims, comprising first fastening means (162) for fastening the first ends of a separator bar (154) to the first girder profile (102) and comprising second fastening means (168) for fastening the second end of the separator bar (154) to the second girder profile (104).

9. Shelving system according to any of preceding claim, wherein the first girder profile (102) has a connection region (134), which connects the first contact surface (112) and the first fastening region (114) to one another, wherein a plurality of through holes (136) arranged side-by-side are formed in the connection region.

10. Shelving system according to any of preceding claims, comprising fastening means (152, 168) for fastening a separator bar (154) to the first girder profile (102) and the second girder profile (104), wherein the fastening means have engaging elements (164, 170) for engaging in the through holes (136, 146) formed in the first and second girder profiles (102, 104).

11. Shelving system according to claim 10, wherein the engaging elements (164, 170) are fork-shaped.

12. Shelving system according to any of preceding claims, comprising separator bars (154), wherein the separator bars (154) are each formed as a hollow profile to form roller conveyers, wherein the hollow profile is closed, and wherein the hollow profile is open at the bottom at the first and second ends thereof, so that fastening means can be introduced into the hollow profile to fasten a separator bar (154) to the first and second girder profiles (102, 104).

13. Shelving system according to any of preceding claims, wherein the first fastening means (162) are formed to fasten the first end of a separator bar (154) to the first girder profile (102) for a loose mounting of the separator bar (154) on the first end, and wherein the second fastening means (168) are formed to fasten the second end of the separator bar (154) to the second girder profile (104) to form a screw connection (174, 176) for a rigid mounting of the second end of the separator bar (154).

14. Shelving system according to claim 13, wherein the separator bar (154) has an elongated hole (160) at the second end thereof, through which the screw connection (174, 176) is formed.

15. Shelving system according to any of preceding claims, wherein the insertion element (100) has at least two support profiles (108) which are fastened between the first and second girder profiles (102, 104).

16. Shelving system according to any of preceding claims, wherein each of the fastening positions (140) is formed to fasten the roller bars (106) through a respective plug connection in the first and second fastening regions (114, 118).

17. Shelving system according to any of preceding claim, wherein the first and second girder profiles (102, 104) have the same width, so that the girder profiles (102, 104) of a plurality of insertion elements (100) inserted side-by-side between the longitudinal beams (120, 120', 122, 122') form edges (124, 126).

18. Shelving system according to any of preceding claims, comprising a contact element (180), wherein at least one of the first and second girder profiles (102, 104) has means (182) for forming a detachable connection (178) to the contact element in order to fasten the contact element underneath the contact surface (112, 116), so that the longitudinal beams (120, 120', 122, 122') can be placed on the contact element rather than on the contact surface.

## Revendications

1. Système d'étagère avec un châssis d'appui (130) pour recevoir des traverses longitudinales (120, 120', 122, 122') et avec des segments d'insertion (100) à insérer entre deux traverses longitudinales (120, 120', 122, 122') en regard l'une de l'autre, dans lequel un segment d'insertion (100) est formé par plusieurs listels à rouleaux (106) agencés parallèlement l'un à l'autre, lesquels listels sont fixés, à leurs premières extrémités, sur un premier profilé porteur (102) et, à leurs secondes extrémités, sur un second profilé porteur (104), dans lequel il se présente, sur l'extrémité supérieure du premier profilé porteur (102), une première surface d'appui (112) à appliquer sur l'une des traverses longitudinales (120, 120', 122, 122'), dans lequel il se présente, à l'extrémité inférieure du premier profilé porteur (102), une première zone de fixation (114) pour fixer les premières extrémités des listels à rouleaux (106), dans lequel la première surface d'appui (112) est espacée de la première zone de fixation (114) d'une première distance et dans lequel il se présente, à l'extrémité supérieure du second profilé porteur (104), une seconde surface d'appui (116) à appliquer sur l'une des traverses longitudinales (120, 120', 122, 122'), dans lequel il se présente, à l'extrémité inférieure du second profilé porteur (104), une seconde zone de fixation (118) pour fixer les secondes extrémités des listels à rouleaux (106), dans lequel la seconde surface d'appui (116) est espacée de la seconde zone de fixation (118) d'une seconde distance, dans lequel la première distance est supérieure à la seconde distance de sorte que, dans une position insérée entre les traverses longitudinales (120, 120', 122, 122'), les listels à rouleaux (106) du segment d'insertion (100) présentent une déclivité allant de leurs secondes extrémités à leurs premières extrémités, dans lequel les premier et second profilés porteurs (102, 104) sont respectivement formés d'une tôle cintrée, et dans lequel les première et seconde surfaces d'appui (112, 116) sont formées pour s'appliquer sur l'une des traverses longitudinales (120, 120', 122, 122'), **caractérisé en ce que**, sur l'extrémité savant de la seconde surface d'appui (116), un angle aigu (144, 150) est formé, dans lequel l'angle aigu présente une branche supérieure (144) et une branche inférieure (150), dans lequel angle supérieur (144) sont formés plusieurs trous traversants (146) ménagés l'un à côté de l'autre.

2. Système d'étagère selon la revendication 1, dans lequel une zone d'étagère pour palette est formée par au moins certains des châssis d'appui (130) et au moins certaines des traverses longitudinales (120, 120', 122, 122').

3. Système d'étagère selon la revendication 1 ou la revendication 2, dans lequel une zone d'étagère de passage de colis est formée par des segments d'insertion (100) insérés entre des traverses longitudinales (120, 120', 122, 122') en regard l'une de l'autre.

4. Système d'étagère selon la revendication 1, 2 ou 3, dans lequel un angle obtus (116, 142) est formé sur l'extrémité arrière de la seconde surface d'appui (116).

5. Système d'étagère selon l'une quelconque des revendications précédentes, dans lequel une surface (148), qui part de la branche inférieure (150) de l'angle aigu et est orientée verticalement quand l'élément d'insertion (100) est inséré, relie la branche inférieure (150) à la seconde zone de fixation (118).

6. Système d'étagère selon la revendication 5, dans lequel la distance dans la direction horizontale entre la surface (148) et l'extrémité arrière de la seconde surface d'appui (116) est égale à la largeur d'une traverse longitudinale (120, 120', 122, 122').

7. Système d'étagère selon l'une quelconque des revendications précédentes, dans lequel il se présente, sur le second profilé porteur (104), une saillie, plusieurs trous traversants (146) ménagés l'un à côté de l'autre étant formés dans la saillie, la saillie étant conformée pour recevoir des moyens de fixation (174).

8. Système d'étagère selon l'une quelconque des revendications précédentes, pourvu de premiers moyens de fixation (162) pour fixer les premières extrémités d'un listel de séparation (154) sur le premier profilé porteur (102), et avec des seconds moyens de fixation (168) pour fixer la seconde extrémité du listel de séparation (154) sur le second profilé porteur (104).

9. Système d'étagère selon l'une quelconque des revendications précédentes, dans lequel le premier profilé porteur (102) présente une zone de liaison (134) qui relie la première surface d'appui (112) et la première zone de fixation (114) l'une à l'autre, dans lequel plusieurs trous traversants (136) ménagés l'un à côté de l'autre sont formés dans la zone de liaison.

10. Système d'étagère selon l'une quelconque des revendications précédentes, pourvu de moyens de fixation (162, 168) pour fixer un listel de séparation (154) sur le premier profilé porteur (102) et sur le second profilé porteur (104), dans lequel les moyens de fixation présentent des éléments d'engagement (164, 170) pour s'engager dans les trous traversants (136, 146) ménagés dans les premier et second profilés porteurs (102, 104).

11. Système d'étagère selon la revendication 10, dans lequel les éléments d'engagement (164, 170) sont en forme de fourche.

12. Système d'étagère selon l'une quelconque des revendications précédentes, pourvu de listels de séparation (154), dans lequel les listels de séparation (154) pour la formation de voies à rouleaux se présentent respectivement sous la forme d'un profilé creux, dans lequel le profilé creux est fermé et dans lequel le profilé creux est ouvert vers le bas à ses première et seconde extrémités de sorte que des moyens de fixation puissent être insérés dans le profilé creux pour fixer un listel de séparation (154) sur les premier et second profilés porteurs (102, 104).

13. Système d'étagère selon l'une quelconque des revendications précédentes, dans lequel les premiers moyens de fixation (162) pour fixer la première extrémité d'un listel de séparation (154) sur le premier profilé porteur (102) pour un support lâche du listel de séparation (154) sont formés sur la première extrémité, et dans lequel les seconds moyens de fixation (168) pour la fixation de la seconde extrémité du listel de séparation (154) sont formés sur le second profilé porteur (104) pour former une liaison à vis (174, 176) pour un support solide de la seconde extrémités du listel de séparation (154).

14. Système d'étagère selon la revendication 13, dans lequel le listel de séparation (154) présente sur sa seconde extrémité un trou allongé (160) à travers lequel la liaison à vis (174, 176) est formée.

15. Système d'étagère selon l'une quelconque des revendications précédentes, dans lequel le segment d'insertion (100) présente au moins deux profilés d'appui (108) qui sont fixés entre les premier et second profilés porteurs (102, 104).

16. Système d'étagère selon l'une quelconque des revendications précédentes, dans lequel, dans les première et seconde zones de fixation (114, 118) respectivement, des positions de fixation (140) pour la fixation des listels à rouleaux (106) sont formées par respectivement une liaison d'enfichage.

17. Système d'étagère selon l'une quelconque des revendications précédentes, dans lequel les premier et second profilés porteurs (102, 104) ont la même largeur, si bien que des arêtes (124, 126) sont formées par les profilés porteurs (102, 104) de plusieurs segments d'insertion (100) insérés l'un à côté de l'autre entre les traverses longitudinales (120, 120', 122, 122').

18. Système d'étagère selon l'une quelconque des revendications précédentes, pourvu d'un élément d'appui (180), dans lequel au moins l'un des premier et second profils porteurs (102, 104) présente des moyens (182) pour former une liaison amovible (178) avec l'élément d'appui pour fixer l'élément d'appui en dessous de la surface d'appui (112, 116) de sorte que la traverse longitudinale (120, 120', 122, 122') puisse s'appliquer sur l'élément d'appui au lieu de la surface d'appui.
